# EUROPEAN PATENT APPLICATION

(11) **EP 4 803 935 A1**
(43) Date of publication of application: **09.09.2026**
(21) Application number: 25776886.1
(22) Date of filing: 25.03.2025
(51) Int. Cl.: G01S 19/42, G01S 19/07, H04W 4/02, H04W 4/44

(54) **VEHICLE POSITIONING METHOD AND APPARATUS, AND TERMINAL DEVICE AND STORAGE MEDIUM**

(30) Priority: 29.03.2024 CN 202410378549
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310000 (CN)
(72) Inventor: LIN, Bin, Ningbo, Zhejiang 315899 (CN); HUANG, Guanming, Ningbo, Zhejiang 315899 (CN)
(74) Representative: Elzaburu S.L.P.
(86) International application number: PCT/CN2025/084712
(87) International publication number: WO 2025/201321

(57) **Abstract**

A vehicle positioning method, an apparatus, a terminal device, and a storage medium, relating to the field of high-precision positioning and applied to a satellite device. The method includes: receiving vehicle positioning data sent by vehicle-mounted device in response to determining that network conditions meet preset data transmission conditions (S30); and obtaining positioning calibration data through a core network according to the vehicle positioning data, and sending the positioning calibration data to the vehicle-mounted device (S50).

## Description

### CROSS-REFERENCE TO RELATED APPLICATIONS

This application claims priority to Chinese patent application No. 202410378549.8, filed on March 29, 2024, the entire contents of which are incorporated herein by reference.

### TECHNICAL FIELD

The present application relates to the field of high-precision positioning, and particularly relates to a vehicle positioning method, a vehicle positioning apparatus, a terminal device, and a storage medium.

### BACKGROUND

With continuous development and progress of society, whether the logistics industry needs to track cargo transportation conditions in real time, or a public security department needs to effectively manage and dispatch emergency vehicles such as police cars and ambulances, demands of people for vehicle positioning show a continuously increasing trend. Accurate and timely understanding of vehicle positions has become an important requirement in various fields. Therefore, a vehicle positioning method with relatively high accuracy is needed to provide high-precision vehicle position information for vehicles.

Currently, commonly used vehicle positioning methods are relatively traditional, that is, a vehicle mainly communicates with a reference station through a network and acquires verified vehicle position information sent by the reference station. However, since the vehicle has relatively high requirements for network signals in a process of acquiring the vehicle position information, when the vehicle is located in an environment with poor network signals, such as an urban canyon, a remote mountainous area, or a tunnel, the vehicle cannot acquire accurate vehicle position information through the network. Therefore, the traditional vehicle positioning methods still have a problem of relatively poor vehicle positioning accuracy when the vehicle lacks network signals.

### SUMMARY

A main purpose of the present application is to provide a vehicle positioning method, a vehicle positioning apparatus, a terminal device, and a storage medium, thereby solving a problem of relatively poor vehicle positioning accuracy when a vehicle lacks network signals.

To achieve the above purpose, the present application provides a vehicle positioning method, applied to a satellite device, the method includes:
receiving vehicle positioning data sent by vehicle-mounted device in response to determining that network conditions meet preset data transmission conditions; and
obtaining positioning calibration data through a core network according to the vehicle positioning data, and sending the positioning calibration data to the vehicle-mounted device.

In an embodiment, before the receiving vehicle positioning data sent by the vehicle-mounted device in response to determining that the network conditions meet the preset data transmission conditions, the method includes:
receiving a satellite positioning data request instruction sent by the vehicle-mounted device; and
obtaining satellite positioning data according to the satellite positioning data request instruction, and sending the satellite positioning data to the vehicle-mounted device, such that the vehicle-mounted device determines the network conditions.

In an embodiment, before the obtaining positioning calibration data through the core network according to the vehicle positioning data and sending the positioning calibration data to the vehicle-mounted device, the method includes:
sending the satellite positioning data to a reference station, such that the reference station sends the satellite positioning data to the core network; and verifying, by the core network, the satellite positioning data to obtain a verification result.

In an embodiment, the obtaining positioning calibration data through the core network according to the vehicle positioning data and sending the positioning calibration data to the vehicle-mounted device includes:
sending the vehicle positioning data to the core network through a preset protocol gateway, such that the core network verifies the vehicle positioning data according to the verification result to obtain the positioning calibration data; and
receiving the positioning calibration data returned by the core network through the protocol gateway, and sending the positioning calibration data to the vehicle-mounted device.

In an embodiment, the vehicle positioning method is applied to a vehicle-mounted device, the method includes:
obtaining vehicle positioning data;
sending the vehicle positioning data to the satellite device and receiving positioning calibration data returned by the satellite device in response to determining that network conditions meet preset data transmission conditions; and
calibrating the vehicle positioning data according to the positioning calibration data to obtain a positioning result.

In an embodiment, the obtaining vehicle positioning data includes:
obtaining a satellite positioning data request instruction;
sending the positioning data request instruction to the satellite device, and receiving the satellite positioning data returned by the satellite device; and
generating vehicle positioning data according to the satellite positioning data.

In an embodiment, before the sending the vehicle positioning data to the satellite device in response to determining that the network conditions meet the preset data transmission conditions, the method includes:
sending the vehicle positioning data to the core network, and determining a sending result of the vehicle positioning data, the sending result includes sending success and sending failure; and
in response to the sending result being sending failure, determining whether the network conditions meet the preset data transmission conditions.

The embodiments of the present application further provide a vehicle positioning apparatus, the vehicle positioning apparatus includes:
a data receiving module configured to receive vehicle positioning data sent by vehicle-mounted device in response to determining that network conditions meet preset data transmission conditions;
a data transmission module configured to obtain positioning calibration data through a core network according to the vehicle positioning data, and send the positioning calibration data to the vehicle-mounted device.

The embodiments of the present application further provide a terminal device, the terminal device includes a memory, a processor, and a vehicle positioning program stored in the memory and executable on the processor, when the vehicle positioning program is executed by the processor, steps of the above vehicle positioning method are implemented.

The embodiments of the present application further provide a computer-readable storage medium, the computer-readable storage medium stores a vehicle positioning program, when the vehicle positioning program is executed by a processor, steps of the above vehicle positioning method are implemented.

The vehicle positioning method, apparatus, terminal device, and storage medium provided in the embodiments of the present application receive vehicle positioning data sent by vehicle-mounted device in response to determining that network conditions meet preset data transmission conditions; and obtain positioning calibration data through a core network according to the vehicle positioning data, and send the positioning calibration data to the vehicle-mounted device. Since when a vehicle lacks network signals, the vehicle cannot obtain high-precision vehicle positioning, when the vehicle-mounted device determines that current network conditions meet the preset data transmission conditions, the vehicle-mounted device sends the vehicle positioning data to the satellite device; when the satellite device receives the vehicle positioning data sent by the vehicle-mounted device, it can determine that the vehicle is located in a position with poor network signals; at this time, the satellite device can obtain calibrated positioning calibration data by accessing the core network and directly send the positioning calibration data to the vehicle-mounted device; after receiving the calibrated positioning calibration data, the vehicle-mounted device can calibrate the vehicle positioning data thereof, and finally the vehicle can obtain a high-precision vehicle positioning result. By means of the method, when the vehicle enters an area with poor network signals, the high-precision vehicle positioning result can still be obtained, thereby greatly ensuring driving safety of a driver.

### BRIEF DESCRIPTION OF THE DRAWINGS

FIG. 1 is a schematic diagram of functional modules of a terminal device belonging to a vehicle positioning apparatus according to the present application.
FIG. 2 is a schematic flowchart of a vehicle positioning method according to a first embodiment of the present application.
FIG. 3 is a schematic flowchart of the vehicle positioning method according to a second embodiment of the present application.
FIG. 4 is a schematic flowchart of the vehicle positioning method according to a third embodiment of the present application.
FIG. 5 is a schematic flowchart of the vehicle positioning method according to a fourth embodiment of the present application.
FIG. 6 is a schematic flowchart of the vehicle positioning method according to a fifth embodiment of the present application.
FIG. 7 is a schematic flowchart of the vehicle positioning method according to a sixth embodiment of the present application.
FIG. 8 is a schematic flowchart of the vehicle positioning method according to a seventh embodiment of the present application.
FIG. 9 is a schematic diagram of a technical process when a vehicle network is normal in the vehicle positioning method according to the present application.
FIG. 10 is a schematic diagram of a technical process when a vehicle network is abnormal in the vehicle positioning method according to the present application.

The realization of the purpose, functional features and advantages of the present application will be further described with reference to the embodiments and the accompanying drawings.

### DETAILED DESCRIPTION OF THE EMBODIMENTS

It should be understood that the specific embodiments described herein are merely used to explain the present application and are not intended to limit the present application.

A main solution of the embodiments of the present application is as follows: receiving vehicle positioning data sent by vehicle-mounted device in response to determining that network conditions meet preset data transmission conditions; and obtaining positioning calibration data through a core network according to the vehicle positioning data, and sending the positioning calibration data to the vehicle-mounted device. Since when a vehicle lacks network signals, the vehicle cannot obtain high-precision vehicle positioning, when the vehicle-mounted device determines that current network conditions meet the preset data transmission conditions, the vehicle-mounted device sends the vehicle positioning data to the satellite device; when the satellite device receives the vehicle positioning data sent by the vehicle-mounted device, it can determine that the vehicle is located in a position with poor network signals; at this time, the satellite device can obtain calibrated positioning calibration data by accessing the core network and directly send the positioning calibration data to the vehicle-mounted device; after receiving the calibrated positioning calibration data, the vehicle-mounted device can calibrate the vehicle positioning data thereof, and finally the vehicle can obtain a high-precision vehicle positioning result. By means of the method, when the vehicle enters an area with poor network signals, the high-precision vehicle positioning result can still be obtained, thereby greatly ensuring driving safety of a driver.

In this embodiment, it is considered that with continuous development and progress of society, demands for vehicle positioning are continuously increasing, and accurately and timely obtaining vehicle positions has become an important requirement in various fields. At present, commonly used vehicle positioning methods are relatively traditional, that is, a vehicle mainly communicates with a reference station through a network and obtains verified vehicle position information sent by the reference station. However, since the vehicle has relatively high requirements on network signals in a process of obtaining position information, when the vehicle is located in an environment with poor network signals such as an urban canyon, a remote mountainous area, or a tunnel, the vehicle cannot obtain accurate vehicle position information through the network. Therefore, the traditional vehicle positioning method still has a problem of poor positioning accuracy when the vehicle lacks network signals.

Based on this, the embodiments of the present application provide a solution. When a vehicle is located in an area lacking network signals and the vehicle-mounted device determines that current network conditions meet preset data transmission conditions, the vehicle-mounted device sends vehicle positioning data to the satellite device. When the satellite device receives the vehicle positioning data sent by the vehicle-mounted device, it can determine that the vehicle is currently located in an area with poor network signals. At this time, the satellite device can obtain calibrated positioning calibration data by accessing the core network and directly send the positioning calibration data to the vehicle-mounted device. After receiving the calibrated positioning calibration data, the vehicle-mounted device can calibrate the vehicle positioning data thereof, and finally the vehicle can obtain a high-precision vehicle positioning result. By means of the method, when the vehicle enters an area with poor network signals, the high-precision vehicle positioning result can still be obtained, thereby greatly ensuring driving safety of a driver.

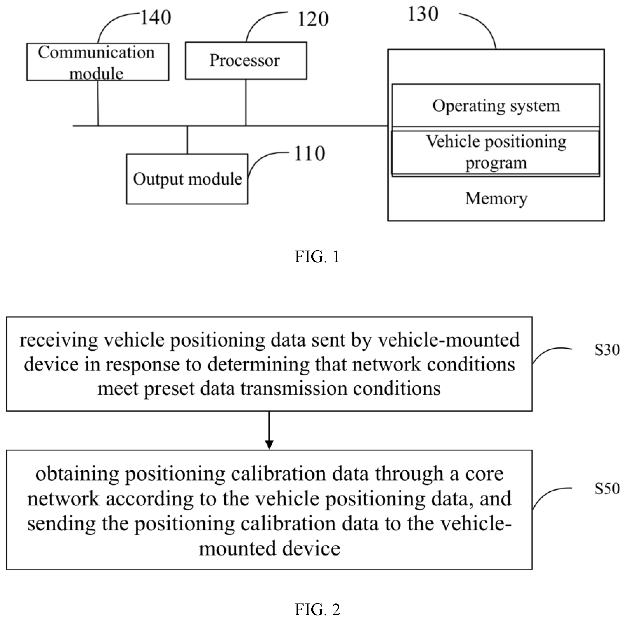

Specifically, according to FIG. 1, FIG. 1 is a schematic diagram of functional modules of a terminal device belonging to a vehicle positioning apparatus according to the present application. The vehicle positioning apparatus may be a data processing apparatus independent of the terminal device, or may be carried on the terminal device in a form of hardware or software.

In this embodiment, the terminal device to which the vehicle positioning apparatus belongs at least includes an output module 110, a processor 120, a memory 130, and a communication module 140.

An operating system and a vehicle positioning program are stored in the memory 130. By receiving vehicle positioning data sent by vehicle-mounted device in response to determining that network conditions meet preset data transmission conditions, and obtaining positioning calibration data through a core network according to the vehicle positioning data and sending the positioning calibration data to the vehicle-mounted device, the positioning result is stored in the memory 130. The output module 110 may be a display screen, a speaker, or the like. The communication module 140 may include a Wi-Fi module, a mobile communication module, a Bluetooth module, and the like, and communicates with an external device or a server through the communication module 140.

When the vehicle positioning program in the memory 130 is executed by the processor, the following steps are implemented:
receiving vehicle positioning data sent by vehicle-mounted device in response to determining that network conditions meet preset data transmission conditions; and
obtaining positioning calibration data through a core network according to the vehicle positioning data, and sending the positioning calibration data to the vehicle-mounted device.

In an embodiment, when the vehicle positioning program in the memory 130 is executed by the processor, the following steps are further implemented:
receiving a satellite positioning data request instruction sent by the vehicle-mounted device; and
obtaining satellite positioning data according to the satellite positioning data request instruction, and sending the satellite positioning data to the vehicle-mounted device, such that the vehicle-mounted device determines the network conditions.

In an embodiment, when the vehicle positioning program in the memory 130 is executed by the processor, the following steps are further implemented:
sending the satellite positioning data to a reference station, such that the reference station sends the satellite positioning data to the core network; and
verifying, by the core network, the satellite positioning data to obtain a verification result.

In an embodiment, when the vehicle positioning program in the memory 130 is executed by the processor, the following steps are further implemented:
sending the vehicle positioning data to the core network through a preset protocol gateway, such that the core network verifies the vehicle positioning data according to the verification result to obtain the positioning calibration data; and
receiving the positioning calibration data returned by the core network through the protocol gateway, and sending the positioning calibration data to the vehicle-mounted device.

In an embodiment, when the vehicle positioning program in the memory 130 is executed by the processor, the following steps are further implemented:
obtaining vehicle positioning data;
sending the vehicle positioning data to satellite device and receiving positioning calibration data returned by the satellite device in response to determining that network conditions meet preset data transmission conditions; and
calibrating the vehicle positioning data according to the positioning calibration data to obtain a positioning result.

In an embodiment, when the vehicle positioning program in the memory 130 is executed by the processor, the following steps are further implemented:
obtaining a request instruction for satellite positioning data;
sending the request instruction for the satellite positioning data to the satellite device, and receiving the satellite positioning data returned by the satellite device; and
generating the vehicle positioning data according to the satellite positioning data.

In an embodiment, when the vehicle positioning program in the memory 130 is executed by the processor, the following steps are further implemented:
sending the vehicle positioning data to the core network, and determining a sending result of the vehicle positioning data, the sending result includes sending success and sending failure; and
in response to the sending result being the sending failure, determining whether the network conditions meet the preset data transmission conditions.

In this embodiment, by means of the above solution, vehicle positioning data sent by vehicle-mounted device in response to determining that network conditions meet preset data transmission conditions is received; and positioning calibration data is obtained through a core network according to the vehicle positioning data, and the positioning calibration data is sent to the vehicle-mounted device. Since when a vehicle lacks network signals, the vehicle cannot obtain high-precision vehicle positioning, when the vehicle-mounted device determines that current network conditions meet the preset data transmission conditions, the vehicle-mounted device sends the vehicle positioning data to the satellite device; when the satellite device receives the vehicle positioning data sent by the vehicle-mounted device, it can determine that the vehicle is located in a position with poor network signals; at this time, the satellite device can obtain calibrated positioning calibration data by accessing the core network and directly send the positioning calibration data to the vehicle-mounted device; after receiving the calibrated positioning calibration data, the vehicle-mounted device can calibrate the vehicle positioning data thereof, and finally the vehicle can obtain a high-precision vehicle positioning result. By means of the method, when the vehicle enters an area with poor network signals, the high-precision vehicle positioning result can still be obtained, thereby greatly ensuring driving safety of a driver.

As shown in FIG. 2, FIG. 2 is a schematic flowchart of a vehicle positioning method according to a first embodiment of the present application.

An embodiment of the present application provides a vehicle positioning method, and the method includes:
step S30, receiving vehicle positioning data sent by vehicle-mounted device in response to determining that network conditions meet preset data transmission conditions;
the vehicle-mounted device refers to various electronic devices and apparatuses installed on a vehicle, and may be used to provide functions such as vehicle entertainment, vehicle safety, vehicle positioning, and navigation. The vehicle-mounted device configured to send vehicle positioning data or a positioning request instruction to the satellite device may be a vehicle-mounted positioning terminal. Specifically, the vehicle-mounted positioning terminal refers to a device integrating a Global Positioning System (GPS), communication technology, and computer technology, and may determine a position, a speed, and a direction of the vehicle by receiving satellite signals, and finally transmit the information to a background server or the satellite device through a communication module, thereby implementing functions such as vehicle tracking, monitoring, and management.

Functions and components of the vehicle-mounted positioning terminal may include:
a GPS receiver configured to determine a position, a speed, and a direction of the vehicle by receiving signals transmitted by satellites, the vehicle-mounted positioning terminal may be installed outside the vehicle to obtain a better signal receiving effect;
a communication module configured to communicate with a background server or a satellite device, the communication module may upload position information and status information of the vehicle to the server or the satellite, or receive instructions from the server and the satellite, such as issuing a navigation route and querying a vehicle status;
a control unit configured to process and manage transmission and processing of vehicle positioning information, and further configured to control functions such as paging, alarming, and recording;
a display screen configured to display a current position of the vehicle, navigation indications, and other related information, thereby helping a driver better understand a vehicle position status;
an external antenna configured to receive satellite signals and improve positioning accuracy, common antennas include a GPS antenna and a GSM antenna;
a storage device configured to store information such as map data and historical positioning records, the storage device generally includes an internal storage manner and an external storage manner; and
a user interface including buttons, a touch screen, and the like, and configured for user input and interaction, through the user interface, the driver may set and operate the vehicle-mounted positioning terminal, such as querying a historical trajectory and enabling an alarm function.

In an embodiment, the vehicle-mounted positioning terminal may send vehicle positioning data including vehicle identification information to the satellite device through the communication module, the vehicle positioning data may be understood as satellite positioning data carrying the vehicle identification information. By means of the method, the satellite device may accurately send positioning calibration data to a corresponding vehicle according to the vehicle identification information, thereby implementing functions such as high-precision positioning and navigation of the vehicle.

The network conditions refer to some specific situations and constraints existing in a network environment when a vehicle or a vehicle-mounted device uses a network connection. Since the specific situations and constraints affect a speed, stability, and reliability of data transmission, when the vehicle needs to obtain a high-precision positioning result, the vehicle-mounted device may analyze current network conditions. According to an analysis result, it may be determined whether the vehicle is located in an area without a network or with poor network signals. When the vehicle-mounted device determines that the vehicle is located in an area without a network or with poor network signals, the vehicle-mounted device may send the vehicle positioning data to the satellite device to obtain the high-precision positioning result.

The data transmission conditions refer to specific values or specific conditions of various specific situations and constraints when the vehicle is located in an area without a network or with poor network signals. For example, when the vehicle enters an area with poor network signals, a data transmission speed of the vehicle decreases, and the data transmission conditions further limit a lower limit value of the data transmission speed, such that the vehicle-mounted device determines current network conditions according to the lower limit value. For example, when the vehicle-mounted device detects that the current data transmission speed of the vehicle decreases to the lower limit value corresponding to the data transmission speed in the data transmission conditions or lower than the lower limit value, the vehicle-mounted device may determine that the vehicle is currently located in an area with poor network signals.

Specifically, various data types configured to determine the network conditions may further include:
bandwidth, which refers to a maximum data transmission capability of a network connection and is usually measured in Mbps or Gbps, by analyzing network bandwidth, a current data transmission speed may be determined;
latency, which refers to time required for network data transmission from sending to receiving, the shorter the latency time is, the faster the data transmission speed is, and for application scenarios with relatively high real-time requirements, such as video calls and online games, low latency is very important, and therefore, the vehicle-mounted device may determine whether current network conditions of the vehicle meet the preset data transmission conditions by detecting latency; and
a packet loss rate, which refers to a probability that some data packets fail to be successfully transmitted to a target device due to network congestion, transmission errors, or poor network signals during a data transmission process, the higher the packet loss rate is, the poorer the data transmission quality is, which may cause data transmission failure or incomplete information.

By limiting numerical contents of the above data types, the vehicle-mounted device may determine whether current network conditions of the vehicle meet the preset data transmission conditions. When determining that the current network conditions of the vehicle meet the preset data transmission conditions, the vehicle-mounted device may send the vehicle positioning data to the satellite device to request acquisition of a high-precision positioning result.

The vehicle positioning data refers to position information data acquired on the vehicle, and may carry identification number information of the vehicle. The identification number information may be configured to query corresponding vehicle information. The vehicle positioning data may be acquired through a Global Positioning System (GPS) or a Beidou Navigation Satellite System, and the positioning data may include information such as longitude and latitude coordinates, altitude, speed, and heading of the vehicle.

As an implementation manner, a time interval for determining network conditions may be set in the vehicle-mounted device, such that current network states are periodically monitored and corresponding decisions are made. Specifically, the implementation manner may include:
setting a default time interval, specifically, setting a default time interval, for example, the vehicle-mounted device performs analysis and determination on the network conditions every 5 minutes and takes the default time interval as a reference time interval, thereby ensuring that the vehicle-mounted device can monitor network states in time;
adaptive adjustment, specifically, dynamically changing the reference time interval by the vehicle-mounted device in an adaptive adjustment manner according to actual situations, for example, when the vehicle enters an area with poor signal coverage, the reference time interval may be shortened from 5 minutes to 1 minute and the shortened time interval is taken as the reference time interval, and by means of the method, a monitoring frequency of network states may be increased when the vehicle enters the area with poor signal coverage;
a low power consumption strategy, specifically, when the network conditions are relatively good and frequent monitoring is not required, the reference time interval may be prolonged to 10 minutes or longer, thereby reducing power consumption; and
event-driven triggering, specifically, in addition to timed interval monitoring, an event-driven triggering mechanism may further be set, for example, when a network state changes suddenly or exceeds a set threshold, network condition analysis is immediately triggered, thereby timely responding to network changes.

Step S50, obtaining positioning calibration data through a core network according to the vehicle positioning data, and sending the positioning calibration data to the vehicle-mounted device;
after the satellite device receives the vehicle positioning data sent by the vehicle-mounted device, the satellite device may obtain the positioning calibration data in the core network according to the vehicle positioning data.

Specifically, after the satellite device accesses the core network by using a non-terrestrial network technology and obtains calibrated positioning calibration data related to the vehicle positioning data in the core network, the satellite device returns the positioning calibration data to a CPE (Customer Premises Equipment) through the non-terrestrial network technology, thereby helping a terminal user in a network-free state obtain the positioning calibration data.

Specifically, in the communication system, a satellite serves as a relay station configured to receive data sent by a terminal user and forward the data to a ground station or another destination, and the CPE may refer to equipment located at a user side, such as a vehicle-mounted device, a satellite phone, or other related equipment. The user equipment communicates with other locations through the satellite, and application scenarios thereof may include remote areas without traditional communication infrastructure.

Satellite backhaul communication oriented to the CPE involves satellites, CPE equipment, ground stations, communication links, frequency bands, and modulation manners.

The communication links refer to physical and logical paths connecting the user CPE equipment, the satellites, and the ground stations. A user sends data to the satellite through the CPE equipment, the satellite receives and forwards the data to the ground station, and then response data is sent back from the ground station to the user. The frequency bands and modulation manners may include a C band, a Ku band, and a Ka band.

The non-terrestrial network technology refers to using a non-terrestrial network, such as satellite communication or an unmanned aerial vehicle, to provide network connection and communication services. By using the non-terrestrial network technology, high-precision positioning data of the vehicle, namely accurate position information, may be acquired by communicating with the non-terrestrial network in an area without coverage of a traditional terrestrial network.

The core network refers to a key part in a mobile communication network and is also a central processing part of an entire mobile communication system, and is configured to process user data and control signaling. The core network connects a radio access network and external networks such as the Internet, and is infrastructure for implementing global services of the mobile communication network. Specifically, subsystems in the core network may include:
a service support subsystem configured to provide functions such as user authentication, charging, and account management;
a transmission control subsystem configured to perform signaling transmission, including call establishment and short message transmission;
a mobility management entity configured to perform mobility management, including location management and paging;
a session management subsystem configured to provide multimedia service support, including voice calls and video calls; and
a user data management subsystem configured to store user information, including user identities and service tariffs.

The above subsystems jointly constitute the core network of the mobile communication network and implement various functions of mobile communication services.

When the vehicle enters an area without a network or with poor network signals and the vehicle-mounted device determines that network conditions meet preset data transmission conditions, the vehicle-mounted device sends vehicle positioning data to the satellite device. The satellite device accesses a 5G core network through a non-terrestrial network technology, obtains positioning calibration data in the 5G core network according to the vehicle positioning data, and returns the positioning calibration data to a corresponding vehicle-mounted device according to vehicle identification information in the vehicle positioning data, thereby helping the vehicle verify the vehicle positioning data thereof to obtain a high-precision vehicle positioning result and avoiding a situation in which the vehicle cannot connect to the core network to obtain high-precision vehicle positioning data in a network-free state.

In an embodiment, a satellite may be directly connected to a mobile phone of a user, and a gateway station is erected on the ground and serves as a gateway to finally connect to the 5G core network. The satellite may directly transmit a 5G signal as a base station to connect with a terminal, or may serve as a transparent forwarding node to transparently transmit a signal sent by a ground station to the vehicle.

Specifically, as an implementation manner, a manner for implementing vehicle-mounted positioning in a network-free state may include:
vehicle-mounted device initialization, specifically, initializing the vehicle-mounted device, including connecting and configuring a satellite communication module, the vehicle-mounted device may be a GPS navigation system or another positioning device installed on a vehicle;
satellite connection, specifically, establishing connection and communication between the vehicle-mounted device and the satellite communication module through a satellite communication card, an antenna, and other equipment;
network condition determination, specifically, detecting current mobile networks and satellite signals by the vehicle-mounted device through detecting signal strengths of equipment such as mobile phone signals, WIFI signals, and satellite communication modules, according to determination on network conditions, the vehicle may select an appropriate manner to transmit vehicle positioning information;
positioning data transmission, specifically, when the vehicle determines that a current network is poor or even unavailable, the vehicle-mounted device sends positioning data of the vehicle, such as GPS coordinates, speed, and direction information, to the satellite communication module;
satellite transmission, specifically, transmitting, by the satellite communication module, the received positioning data to the 5G core network through a non-terrestrial network technology, the process involves communication between a satellite and a ground gateway and data transmission between the gateway and the core network, and specifically, the ground gateway may transmit the received data to a core network of an operator through wired or wireless transmission manners such as an optical fiber and a microwave link;
core network processing, specifically, processing and calculating, by the 5G core network, the received positioning data through processing operations such as calibration and filtering to obtain an accurate vehicle positioning result;
positioning calibration data return, specifically, returning, by the core network, the processed positioning calibration data to the satellite communication module according to an original transmission path of information; and
vehicle-mounted device receiving and application, specifically, transmitting, by the satellite communication module, the positioning calibration data back to the vehicle-mounted device according to the original transmission path of the information, after the vehicle-mounted device receives the positioning calibration data, the vehicle positioning data is verified and corrected, thereby obtaining a calibrated and accurate vehicle positioning result.

It should be noted that the non-terrestrial network technology may be combined with other technologies in a 5G system, such as millimeter wave communication and multiplexing, thereby implementing more efficient and reliable wireless communication.

The vehicle positioning method provided in the embodiments of the present application receives vehicle positioning data sent by vehicle-mounted device in response to determining that network conditions meet preset data transmission conditions; and obtains positioning calibration data through a core network according to the vehicle positioning data, and sends the positioning calibration data to the vehicle-mounted device. Since when a vehicle lacks network signals, the vehicle cannot obtain high-precision vehicle positioning, when the vehicle-mounted device determines that current network conditions meet the preset data transmission conditions, the vehicle-mounted device sends the vehicle positioning data to the satellite device; when the satellite device receives the vehicle positioning data sent by the vehicle-mounted device, it can determine that the vehicle is located in a position with poor network signals; at this time, the satellite device can obtain calibrated positioning calibration data by accessing the core network and directly send the positioning calibration data to the vehicle-mounted device; after receiving the calibrated positioning calibration data, the vehicle-mounted device can calibrate the vehicle positioning data thereof, and finally the vehicle can obtain a high-precision vehicle positioning result. By means of the method, when the vehicle enters an area with poor network signals, the high-precision vehicle positioning result can still be obtained, thereby greatly ensuring driving safety of a driver.

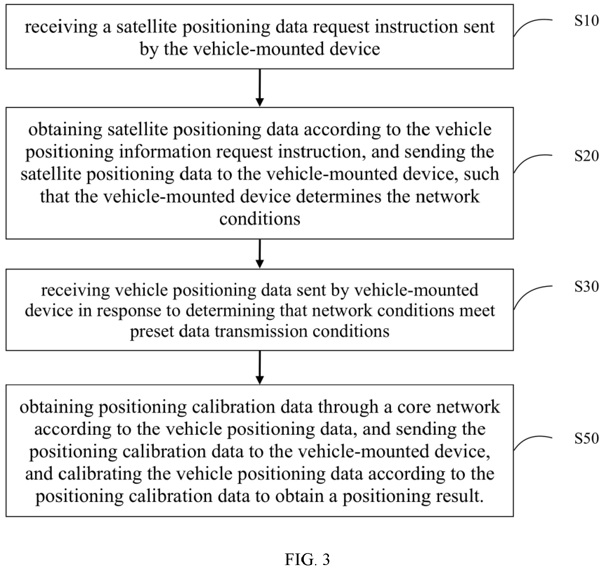

As shown in FIG. 3, FIG. 3 is a schematic flowchart of a vehicle positioning method according to a second embodiment of the present application.

Based on the first embodiment, a second embodiment of the present application is provided. A difference between the second embodiment of the present application and the first embodiment lies in that:
in this embodiment, before step S30, receiving vehicle positioning data sent by vehicle-mounted device in response to determining that network conditions meet preset data transmission conditions, the method further includes:
step S10, receiving a satellite positioning data request instruction sent by the vehicle-mounted device;
in a process of using a satellite for navigation, the vehicle-mounted device may send a request instruction to the satellite to request the satellite to transmit positioning data. This is because a satellite navigation system adopts a passive receiving manner, and only after the vehicle-mounted device sends the request can the satellite return corresponding position information to the vehicle-mounted device.

Therefore, before obtaining the satellite positioning data, the vehicle-mounted device needs to send a special instruction to the satellite, and the instruction includes related information of the vehicle-mounted device, such as vehicle identification information and a current position and speed of the vehicle. After the satellite device receives the instruction, the satellite device calculates an accurate position of the vehicle according to the information provided by the vehicle-mounted device and transmits the positioning data back to the corresponding vehicle-mounted device according to the vehicle identification information.

Step S20, obtaining satellite positioning data according to the vehicle positioning information request instruction, and sending the satellite positioning data to the vehicle-mounted device, such that the vehicle-mounted device determines the network conditions;
after the satellite device receives the satellite positioning data request instruction sent by the vehicle-mounted device, the satellite device may obtain the satellite positioning data according to the satellite positioning data request instruction.

Specifically, steps in which the satellite device obtains the satellite positioning data and sends the satellite positioning data back to the vehicle-mounted device may include:
instruction receiving, specifically, receiving and parsing, by the satellite device, the satellite positioning data request instruction sent by the vehicle-mounted device, the instruction includes related information of the vehicle-mounted device, such as vehicle identification information and a current position and speed of the vehicle;
positioning calculation, specifically, performing, by the satellite device, positioning calculation by using the received information of the vehicle-mounted device in combination with a navigation algorithm and a satellite signal receiving mechanism thereof, the calculation process may involve technologies such as time difference measurement of satellite signals and a Doppler effect to determine an accurate position of the vehicle;
data transmission, specifically, after the satellite device calculates positioning information of the vehicle, encoding and transmitting the positioning data back to the vehicle-mounted device, transmission may be performed through satellite signals, and the satellite encapsulates the positioning data into a signal in a specific format and then transmits the signal to the vehicle-mounted device through a satellite channel; and
vehicle-mounted device receiving, specifically, after the vehicle-mounted device receives the positioning data transmitted by the satellite, decoding and processing the positioning data, according to the received positioning data, the vehicle-mounted device may accurately determine a position thereof and perform corresponding navigation or positioning operations.

In the whole process, the satellite device may position the vehicle and generate positioning data thereof according to the satellite positioning data request instruction sent by the vehicle-mounted device, and finally the satellite device may transmit the generated satellite positioning data back to the vehicle-mounted device, thereby finally implementing accurate positioning of the vehicle.

The vehicle positioning method provided in the embodiments of the present application receives the satellite positioning data request instruction sent by the vehicle-mounted device; obtains the satellite positioning data according to the satellite positioning data request instruction, and sends the satellite positioning data to the vehicle-mounted device, such that the vehicle-mounted device determines the network conditions. When the satellite device receives the satellite positioning data request instruction sent by the vehicle-mounted device, the satellite device may obtain the satellite positioning data according to the instruction and timely return the satellite positioning data to the corresponding vehicle-mounted device, such that the vehicle-mounted device determines the network conditions. By means of the method, the satellite device may provide a high-precision, all-weather, and global real-time positioning service for the vehicle-mounted device, and the vehicle-mounted device may further obtain latest positioning information through the request instruction and determine the network conditions according to the positioning information to select an appropriate communication manner.

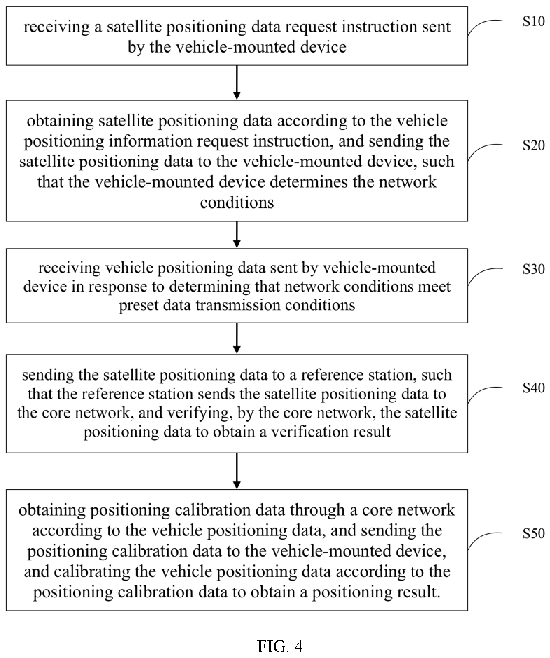

As shown in FIG. 4, FIG. 4 is a schematic flowchart of a vehicle positioning method according to a third embodiment of the present application.

Based on the second embodiment, a third embodiment of the present application is provided. A difference between the third embodiment of the present application and the second embodiment lies in that:
in this embodiment, before step S50, obtaining positioning calibration data through a core network according to the vehicle positioning data and sending the positioning calibration data to the vehicle-mounted device, the method further includes:
step S40, sending the satellite positioning data to a reference station, such that the reference station sends the satellite positioning data to the core network, and verifying, by the core network, the satellite positioning data to obtain a verification result;
the reference station refers to a fixed position point configured to provide precise measurement and position calibration in a Global Navigation Satellite System (GNSS), such as GPS, Beidou, and GLONASS, and position coordinates thereof have been measured and determined with high precision.

After the satellite device receives the satellite positioning data request instruction sent by the vehicle-mounted device and obtains the satellite positioning data according to the satellite positioning data request instruction, the satellite device sends the satellite positioning data to the vehicle-mounted device and may further send the satellite positioning data to the reference station for subsequent data verification by the reference station, the reference station may include a plurality of reference stations.

In an embodiment, after the plurality of reference stations receive the satellite positioning data sent by the satellite device, the reference stations may send the satellite positioning data to the core network, and the satellite positioning data is verified through the core network.

A process in which a plurality of reference stations receive and send the satellite positioning data may include:
reference station receiving satellite positioning data, specifically, different reference stations are distributed at different geographical positions to receive the satellite positioning data from satellites, the reference stations have high-precision measurement equipment and position reference points;
reference station sending the satellite positioning data to the core network, specifically, the reference stations send the received satellite positioning data to the core network, data transmission may be performed through the Internet or a dedicated network; and
core network verifying the satellite positioning data, specifically, after the core network receives the satellite positioning data from the plurality of reference stations, the core network verifies and validates the data.

The process in which the plurality of reference stations verify the satellite positioning data through the core network may include:
the plurality of reference stations receiving the satellite positioning data, specifically, the plurality of reference stations simultaneously receive satellite signals and record respective satellite positioning data thereof;
reference station data uploading to the core network, specifically, each reference station uploads the received satellite positioning data to a core network server;
core network server performing differential processing, specifically, after the core network server receives the data uploaded by the plurality of reference stations, the core network server performs differential processing on the data, a purpose of the differential processing is to eliminate errors among the plurality of reference stations and obtain differential correction amounts relative to a reference station; and
generating differential correction data, specifically, the core network server generates differential correction data according to a result of the differential processing, the differential correction data includes differential correction amounts of each reference station relative to the reference station, and the differential correction data may be understood as the verification result.

By means of the differential positioning method, more accurate positioning results may be provided by using relative differential information among the plurality of reference stations, the core network plays roles of data processing and transmission in the process and coordinates data exchange and correction among the plurality of reference stations.

The vehicle positioning method provided in the embodiments of the present application enables the plurality of reference stations to send collected satellite positioning data to the core network for data interconnection and perform differential verification on the satellite positioning data in the core network according to an interconnection result. By means of the method, influences of error factors such as atmospheric delay and clock error on the satellite positioning data may be effectively eliminated, and the satellite device may obtain more reliable, more accurate, and verified data, thereby meeting requirements of the vehicle for high-precision positioning.

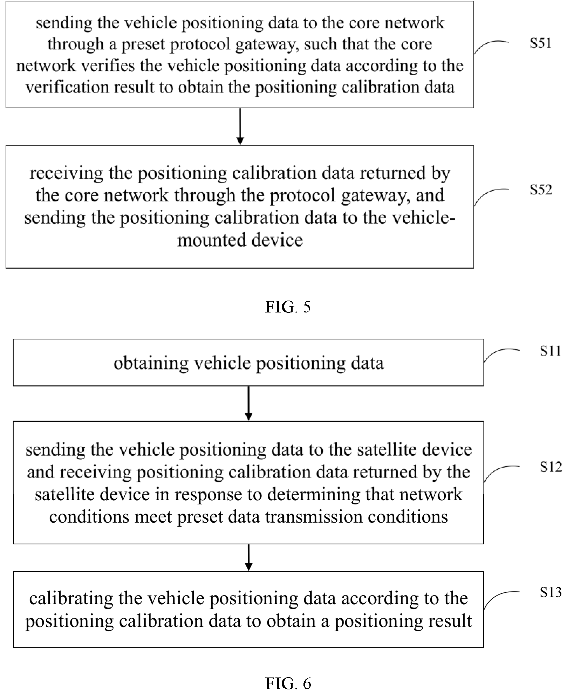

As shown in FIG. 5, FIG. 5 is a schematic flowchart of a vehicle positioning method according to a fourth embodiment of the present application.

Based on the third embodiment, a fourth embodiment of the present application is provided. A difference between the fourth embodiment of the present application and the third embodiment lies in that:
in this embodiment, step S50, obtaining positioning calibration data through a core network according to the vehicle positioning data and sending the positioning calibration data to the vehicle-mounted device, is refined, the refined steps may include:
step S51, sending the vehicle positioning data to the core network through a preset protocol gateway, such that the core network verifies the vehicle positioning data according to the verification result to obtain the positioning calibration data;
after the satellite device obtains the vehicle positioning data, the satellite device may send the vehicle positioning data to the preset protocol gateway, and the vehicle positioning data is sent to the core network through the gateway, such that the core network subsequently performs differential verification on the vehicle positioning data.

The protocol gateway refers to a node for data transmission and exchange and is configured to process communication protocol conversion and data exchange among different devices or systems, thereby ensuring that data can be transmitted and parsed among different protocols. Specifically, the protocol gateway may be located inside or near the vehicle, and the satellite device may send the vehicle positioning data to the protocol gateway, such that the protocol gateway collects, stores, and forwards the data.

Specifically, functions of the protocol gateway may include:
Specifically, main functions of the gateway include:
data collection, specifically, receiving the vehicle positioning data from the satellite device;
data storage, specifically, temporarily storing the vehicle positioning data for subsequent transmission or processing;
data processing, specifically, performing necessary processing on the vehicle positioning data, such as format conversion and encryption and decryption operations;
network connection, specifically, establishing and managing communication connection with the core network, thereby ensuring that the vehicle positioning data can be safely and stably transmitted to the core network; and
data forwarding, specifically, sending the vehicle positioning data to the core network, such that the core network performs differential verification on the vehicle positioning data.

In summary, the protocol gateway serves as a bridge between the satellite device and the core network, thereby ensuring that the satellite device can effectively transmit the vehicle positioning data to the core network, such that the core network processes the data.

Specifically, after the core network receives the vehicle positioning data, the core network may verify the vehicle positioning data according to a verification result of the satellite positioning data previously verified in the core network by the plurality of reference stations, thereby obtaining the positioning calibration data, the positioning calibration data is obtained by verifying the vehicle positioning data through the core network.

Step S52, receiving the positioning calibration data returned by the core network through the protocol gateway, and sending the positioning calibration data to the vehicle-mounted device;
after the satellite device sends the vehicle positioning data to the core network, the satellite device obtains the positioning calibration data returned by the core network after the core network completes differential verification on the vehicle positioning data.

The satellite device receives the positioning calibration data returned by the core network through the protocol gateway.

Specifically, since the protocol gateway provides a specific interface or protocol, a method in which the satellite device obtains the positioning calibration data may include interacting with the protocol gateway through a predefined communication protocol and interface. Specific steps may include:
sending a request, specifically, sending, by the satellite device, a request to the protocol gateway according to the predefined communication protocol to request acquisition of the positioning calibration data;
data transmission, specifically, after the protocol gateway receives the request, communicating with the core network according to an agreed protocol and interface to obtain corresponding positioning calibration data;
data return, specifically, after the protocol gateway obtains the positioning calibration data from the core network, the protocol gateway returns the data to the satellite device according to the predefined communication protocol; and
data processing, specifically, after the satellite device receives the positioning calibration data, parsing and processing the data according to a manner specified in the protocol, thereby completing reception of the data.

The vehicle positioning method provided in the embodiments of the present application enables the satellite device to obtain calibrated positioning calibration data by accessing the core network and directly send the positioning calibration data to the vehicle-mounted device. After receiving the calibrated positioning calibration data, the vehicle-mounted device may calibrate the vehicle positioning data thereof, and finally the vehicle may obtain a high-precision vehicle positioning result. By means of the method, when the vehicle enters an area with poor network signals, the high-precision vehicle positioning result can still be obtained, thereby greatly ensuring driving safety of a driver.

As shown in FIG. 6, FIG. 6 is a schematic flowchart of a vehicle positioning method according to a fifth embodiment of the present application.

A fifth embodiment of the present application provides a vehicle positioning method, and the method includes:
step S11, obtaining vehicle positioning data;
the vehicle positioning data refers to position information data acquired on the vehicle, and may carry identification number information of the vehicle, the identification number information may be configured to query corresponding vehicle information, and the vehicle positioning data may be acquired through a Global Positioning System (GPS) or a Beidou Navigation Satellite System, the vehicle positioning data may include information such as longitude and latitude coordinates, altitude, speed, and heading of the vehicle; and
step S12, sending the vehicle positioning data to the satellite device and receiving positioning calibration data returned by the satellite device in response to determining that network conditions meet preset data transmission conditions;
after the vehicle-mounted device obtains the vehicle positioning data, the vehicle-mounted device may determine the network conditions, and if determining that the network conditions meet the data transmission conditions, the vehicle-mounted device may send the vehicle positioning data including vehicle identification information to the satellite device through a communication module, and in order to obtain high-precision vehicle positioning data, when the vehicle-mounted device determines that the vehicle is located in an area without a network or with poor network signals, the vehicle-mounted device may obtain high-precision positioning calibration data by establishing bidirectional communication with the satellite device.

The network conditions refer to some specific situations and constraints existing in a network environment when a vehicle or a vehicle-mounted device uses a network connection. Since the specific situations and constraints affect a speed, stability, and reliability of data transmission, when the vehicle needs to obtain a high-precision positioning result, the vehicle-mounted device may analyze current network conditions. According to an analysis result, it may be determined whether the vehicle is located in an area without a network or with poor network signals. When the vehicle-mounted device determines that the vehicle is located in an area without a network or with poor network signals, the vehicle-mounted device may send the vehicle positioning data to the satellite device to obtain the high-precision positioning result.

The data transmission conditions refer to specific values or specific conditions of various specific situations and constraints when the vehicle is located in an area without a network or with poor network signals. For example, when the vehicle enters an area with poor network signals, a latency value of the vehicle increases, and the data transmission conditions may further limit an upper limit value of the latency value, such that the vehicle-mounted device determines current network conditions according to the upper limit value. Taking the latency value in the data transmission conditions as an example, when the vehicle-mounted device detects that the current latency value of the vehicle rises to the upper limit value corresponding to the data transmission speed in the data transmission conditions or higher than the upper limit value, the vehicle-mounted device may determine that the vehicle is currently located in an area with poor network signals or without a network.

Step S13, calibrating the vehicle positioning data according to the positioning calibration data to obtain a positioning result;
after the vehicle-mounted device receives the positioning calibration data returned by the satellite device, the vehicle-mounted device may calibrate the previously acquired vehicle positioning data according to the positioning calibration data to obtain the positioning result.

Specifically, the calibration process may include:
receiving positioning calibration data, specifically, receiving, by the vehicle-mounted device, the positioning calibration data returned by the satellite device, the positioning calibration data may include correction information for the previously acquired vehicle positioning data;
data parsing, specifically, parsing, by the vehicle-mounted device, the received positioning calibration data and extracting correction information therein, such as position offset and clock error;
calibration calculation, specifically, according to the received correction information, performing, by the vehicle-mounted device, calibration calculation on the previously acquired vehicle positioning data to correct possible positioning errors or drifts; and
positioning result, specifically, after the calibration calculation, obtaining, by the vehicle-mounted device, a corrected positioning result, the positioning result should more accurately reflect a current position and status of the vehicle.

In practical applications, the calibration process involves complex mathematical models, algorithms, and signal processing technologies, and the above calibration process is merely one example thereof.

The vehicle positioning method provided in the embodiments of the present application enables the vehicle-mounted device to send vehicle positioning data to the satellite device when the vehicle-mounted device determines that current network conditions meet preset data transmission conditions. When the satellite device receives the vehicle positioning data sent by the vehicle-mounted device, it can determine that the vehicle is located in a position with poor network signals. At this time, the satellite device can obtain calibrated positioning calibration data by accessing the core network and directly send the positioning calibration data to the vehicle-mounted device. After receiving the calibrated positioning calibration data, the vehicle-mounted device may calibrate the vehicle positioning data thereof, and finally the vehicle may obtain a high-precision vehicle positioning result. By means of the method, when the vehicle enters an area with poor network signals, the high-precision vehicle positioning result can still be obtained, thereby greatly ensuring driving safety of a driver.

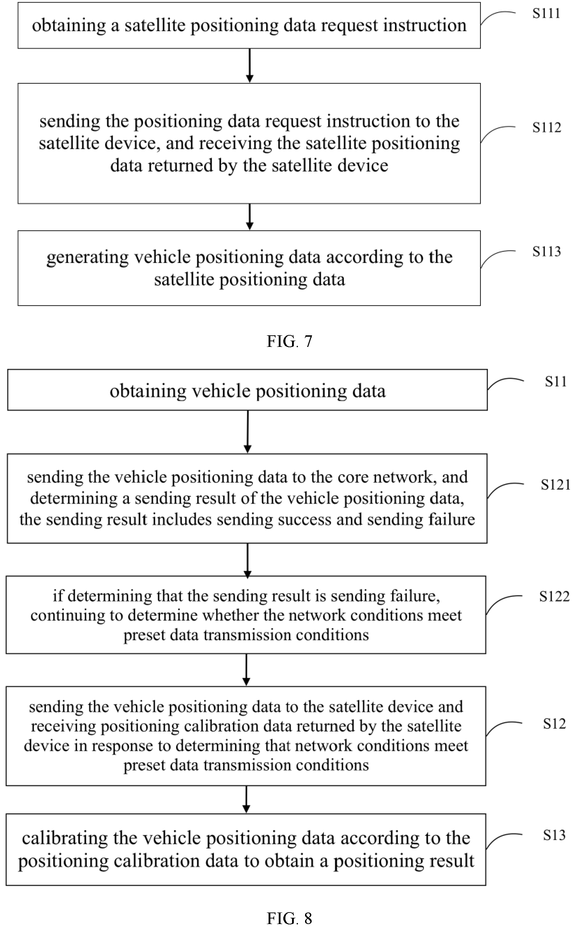

As shown in FIG. 7, FIG. 7 is a schematic flowchart of a vehicle positioning method according to a sixth embodiment of the present application.

Based on the fifth embodiment, a sixth embodiment of the present application is provided. A difference between the sixth embodiment of the present application and the fifth embodiment lies in that:
in this embodiment, step S11, obtaining vehicle positioning data, is refined, the refined steps may include:
step S111, obtaining a satellite positioning data request instruction;
specifically, methods in which the vehicle-mounted device obtains the satellite positioning data request instruction may include:
   user input, specifically, the vehicle-mounted device is usually equipped with a user interface, such as a touch screen, buttons, or knobs, and a user may input the request instruction through the interfaces, for example, in a navigation system, the user may select a destination through the touch screen and confirm sending of the request instruction, and after the user inputs related information, the vehicle-mounted device may generate a corresponding satellite positioning data request instruction according to the information input by the user;
   external device connection, specifically, the vehicle-mounted device may be connected to another external device, such as a mobile phone, a tablet computer, or a computer, by connecting the devices, the vehicle-mounted device may receive the request instruction from the external device, and for example, a destination request is sent to a vehicle-mounted navigation system through a mobile phone APP;
   voice control, specifically, some vehicle-mounted devices support a voice control function, and a user may send the request instruction through a voice command, this requires that the vehicle-mounted device is built with a voice recognition technology and can understand and respond to the voice command of the user; and
   communication with a server through a specific protocol, specifically, in some cases, the vehicle-mounted device may communicate with the server through a specific communication protocol to obtain the request instruction, for example, a vehicle remote monitoring system may receive a remote control instruction by communicating with a vehicle management server.

The above are some methods in which the vehicle-mounted device obtains the satellite positioning data request instruction, and the methods to be selected and used may be determined according to specific types and application scenarios of the vehicle-mounted device.

Step S112, sending the positioning data request instruction to the satellite device, and receiving the satellite positioning data returned by the satellite device;
since the satellite navigation system adopts a passive receiving manner, and only after the vehicle-mounted device sends a request can the satellite return position information thereof to the vehicle-mounted device, before obtaining the satellite positioning data, the vehicle-mounted device needs to send a satellite positioning data request instruction to the satellite to request the satellite to send related satellite positioning data.

After the vehicle-mounted device sends the positioning data request instruction to the satellite device, the vehicle-mounted device may prepare to receive the satellite positioning data returned by the satellite device.

Step S113, generating vehicle positioning data according to the satellite positioning data;
after the vehicle-mounted device receives the satellite positioning data sent by the satellite device, the vehicle-mounted device may obtain vehicle identification information for subsequently generating the vehicle positioning data carrying the vehicle identification information.

The vehicle identification information refers to related data configured to uniquely identify and describe a vehicle, and the vehicle identification information may include an identifier of the vehicle, such as a license plate number.

Steps of the process of generating the vehicle positioning data according to the satellite positioning data may include:
parsing the satellite positioning data, specifically, the vehicle-mounted device first needs to parse the received satellite positioning data to obtain related information such as longitude and latitude, speed, and direction;
obtaining vehicle identification information, specifically, obtaining, by the vehicle-mounted device, identification information of the vehicle, such as a vehicle identifier;
generating the vehicle positioning data, specifically, merging the satellite positioning data and the vehicle identification information to generate the vehicle positioning data, the vehicle positioning data may be a data structure or a message and may include information such as a position, a speed, and a direction of the vehicle; and
storing or transmitting the vehicle positioning data, specifically, storing, by the vehicle-mounted device, the generated vehicle positioning data in a local memory or transmitting the data to the satellite through satellite communication, such that the satellite further processes the data.

It should be noted that specific formats of the vehicle positioning data and data processing logic may vary according to different vehicle-mounted devices.

After the vehicle-mounted device receives the satellite positioning data sent by the satellite device, the vehicle-mounted device adds the obtained vehicle identification information to the satellite positioning data to generate the vehicle positioning data carrying the vehicle identification information, thereby facilitating subsequent return, by the satellite, of the positioning calibration data to the vehicle-mounted device according to the vehicle identification information.

The vehicle positioning method provided in the embodiments of the present application enables acquisition of the satellite positioning data returned by the satellite device by sending a satellite positioning data request instruction to the satellite device when the vehicle needs to obtain the satellite positioning data. Since the satellite positioning data returned by the satellite device does not include vehicle identification information and cannot provide specific vehicle information for subsequent data calibration, after the vehicle-mounted device receives the satellite positioning data, the vehicle-mounted device may combine the vehicle identification information with the satellite positioning data to generate vehicle positioning data carrying the vehicle identification information, such that the vehicle positioning data is subsequently sent to the core network through the satellite device for related verification processing.

As shown in FIG. 8, FIG. 8 is a schematic flowchart of a vehicle positioning method according to a seventh embodiment of the present application.

Based on the sixth embodiment, a seventh embodiment of the present application is provided. A difference between the seventh embodiment of the present application and the sixth embodiment lies in that:
in this embodiment, before step S12, sending the vehicle positioning data to the satellite device and receiving positioning calibration data returned by the satellite device in response to determining that network conditions meet preset data transmission conditions, the method further includes:
step S121, sending the vehicle positioning data to the core network, and determining a sending result of the vehicle positioning data, the sending result includes sending success and sending failure;
in order that the vehicle-mounted device may obtain a high-precision positioning result in real time, the vehicle-mounted device sends the vehicle positioning data to the core network in real time for high-precision data verification. When the vehicle enters an area without a network or with poor network signals, transmission of the vehicle positioning data fails due to network problems. Therefore, in order to determine whether the vehicle has entered the area without a network or with poor network signals, when the vehicle-mounted device sends the vehicle positioning data to the core network, the vehicle-mounted device determines the sending result thereof in real time to determine whether the vehicle positioning data is successfully sent. If determining that the vehicle positioning data is successfully sent, the vehicle-mounted device may determine that the vehicle is located in an area with relatively good network signals, and may directly send the vehicle positioning data to the core network for data verification. If determining that the vehicle positioning data fails to be sent, the vehicle-mounted device may determine that the vehicle is located in an area without a network or with poor network signals, and the vehicle-mounted device may further determine whether the network conditions meet the preset data transmission conditions for subsequent processing on the vehicle positioning data.

After the vehicle generates the vehicle positioning data, the vehicle may choose to directly send the vehicle positioning data to the core network for data verification or choose to send the vehicle positioning data to the satellite device such that the satellite device processes the vehicle positioning data. A specific data transmission object may be selected according to the sending result, that is, when the vehicle is located in an area with relatively good network signals, the vehicle-mounted device may directly send the vehicle positioning signal to the core network, and when the vehicle is located in an area with relatively poor network signals or even without a network, the vehicle-mounted device may send the vehicle positioning signal to the satellite device.

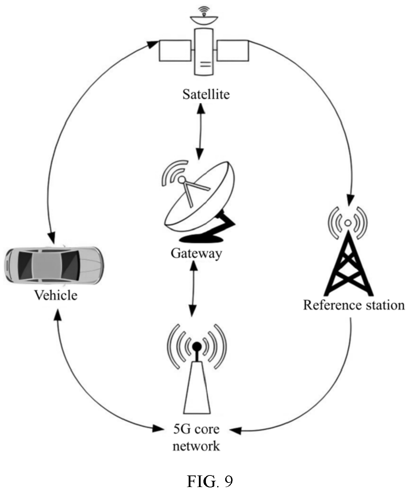

FIG. 9 is a schematic diagram of a technical process when a vehicle network is normal in the vehicle positioning method according to the present application.

As shown in FIG. 9, when network connection between the vehicle and the core network is normal, steps of the vehicle positioning method may include:
1. the vehicle and a reference station receive satellite positioning data.
2. the reference station accesses the 5G core network, transmits the satellite positioning data to the core network, and performs differential verification on the satellite positioning data through the core network.
3. the 5G core network performs differential verification on the received satellite positioning data to obtain high-precision positioning calibration data.
4. the 5G core network feeds back the obtained high-precision positioning calibration data to the vehicle-mounted device.

It should be noted that in order that the 5G core network can better perform differential verification on the satellite positioning data, the number of reference stations may be a plurality of reference stations. Precision of the positioning calibration data may be improved by connecting the plurality of reference stations to the 5G core network to jointly perform differential verification.

In an embodiment, the vehicle-mounted device may synchronously send the vehicle positioning data to the 5G core network, perform real-time calculation on the vehicle positioning data carrying the vehicle identification information and the satellite positioning data fed back by the plurality of reference stations, finally obtain positioning calibration data carrying the vehicle identification information, and accurately transmit the data back to the corresponding vehicle-mounted device according to the vehicle identification information, thereby avoiding erroneous transmission and missing transmission.

Step S122, if determining that the sending result is sending failure, continuing to determine whether the network conditions meet preset data transmission conditions;
when the vehicle-mounted device determines that the vehicle positioning data fails to be sent, it indicates that the vehicle has entered an area without a network or with poor network signals. At this time, the vehicle-mounted device continues to determine whether current network conditions meet the preset data transmission conditions.

In an embodiment, if determining that the network conditions meet the preset data transmission conditions, it indicates that the current vehicle may lose network connection with the core network. At this time, the vehicle-mounted device may send the vehicle positioning data to the satellite device, and the satellite device transmits the vehicle positioning data to the core network through the protocol gateway.

If determining that the network conditions do not meet the preset data transmission conditions, it indicates that the current vehicle may have a relatively low transmission speed or only temporarily lose network connection with the core network. At this time, the vehicle-mounted device may resend the vehicle positioning data to the core network and determine the sending result again to confirm whether previous sending failure of the vehicle positioning data is accidental sending failure.

In an embodiment, when the vehicle-mounted device determines that the network conditions do not meet the preset data transmission conditions, the vehicle-mounted device may further simultaneously send the vehicle positioning data to the satellite device as an alternative solution, thereby avoiding consumption of a large amount of time caused by repeatedly determining the sending result, which causes serious deviation of the vehicle.

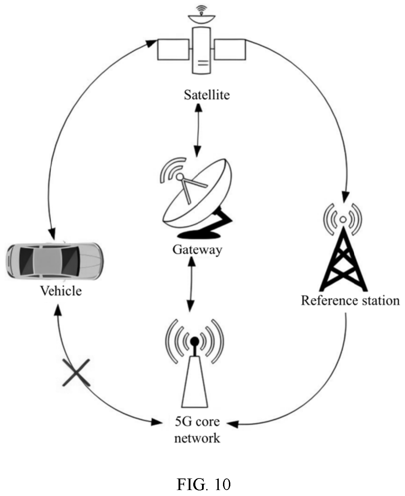

FIG. 10 is a schematic diagram of a technical process when a vehicle network is abnormal in the vehicle positioning method according to the present application.

As shown in FIG. 10, when network connection between the vehicle and the core network is abnormal, steps of the vehicle positioning method may include:
1. the vehicle and a reference station receive satellite positioning data.
2. when the vehicle-mounted device determines that the vehicle positioning data fails to be sent and the vehicle loses network connection with the 5G core network, the vehicle-mounted device feeds back the vehicle positioning data to the satellite device through a satellite link.
3. the reference station feeds back the satellite positioning data to the 5G core network through a cellular network.
4. the satellite device forwards the vehicle positioning data to a gateway.
5. the gateway transmits the vehicle positioning data received from the satellite device to the 5G core network.
6. differential verification is performed on various collected positioning data through a 5G core network access server.
7. accurate positioning calibration data is fed back to the vehicle side through the satellite link.

Through the above steps, when the vehicle is located in an area without a network or with poor network signals, the vehicle-mounted device can still send data to an external device through satellite communication, thereby overcoming a problem of inaccurate high-precision positioning in an area without simultaneous coverage of a base station and a network.

The vehicle positioning method provided in the embodiments of the present application sends the vehicle positioning data to the core network and determines a sending result of the vehicle positioning data, the sending result includes sending success and sending failure; if the sending result is sending failure, determines whether the network conditions meet preset data transmission conditions; sends the vehicle positioning data to the satellite device and receives positioning calibration data returned by the satellite device in response to determining that the network conditions meet the preset data transmission conditions; and calibrates the vehicle positioning data according to the positioning calibration data to obtain a positioning result. By determining, by the vehicle-mounted device, the sending result of the vehicle positioning data and the network conditions, the vehicle-mounted device may select a better processing result for the vehicle positioning information, thereby saving costs of data transmission and improving efficiency of data transmission, such that the vehicle can still obtain high-precision positioning calibration data and obtain a high-precision positioning result in an area without a network or with poor network signals.

In addition, the embodiments of the present application further provide a vehicle positioning apparatus, the vehicle positioning apparatus includes:
a data receiving module configured to receive vehicle positioning data sent by vehicle-mounted device in response to determining that network conditions meet preset data transmission conditions;
a data transmission module configured to obtain positioning calibration data through a core network according to the vehicle positioning data, and send the positioning calibration data to the vehicle-mounted device.

For principles and implementation processes of vehicle positioning implemented in this embodiment, reference may be made to the above embodiments, and details are not described herein again.

In addition, the embodiments of the present application further provide a terminal device, the terminal device includes a memory, a processor, and a vehicle positioning program stored in the memory and executable on the processor, when the vehicle positioning program is executed by the processor, steps of the above vehicle positioning method are implemented.

Since when the vehicle positioning program is executed by the processor, all technical solutions of the foregoing embodiments are adopted, all beneficial effects brought by all the technical solutions of the foregoing embodiments are achieved at least, and details are not described herein one by one again.

In addition, the embodiments of the present application further provide a terminal device, the terminal device includes a memory, a processor, and a vehicle positioning program stored in the memory and executable on the processor, when the vehicle positioning program is executed by the processor, steps of the above vehicle positioning method are implemented.

Since when the vehicle positioning program is executed by the processor, all technical solutions of the foregoing embodiments are adopted, all beneficial effects brought by all the technical solutions of the foregoing embodiments are achieved at least, and details are not described herein one by one again.

Compared with the related art, the vehicle positioning method provided in the embodiments of the present application receives vehicle positioning data sent by vehicle-mounted device in response to determining that network conditions meet preset data transmission conditions; and obtains positioning calibration data through a core network according to the vehicle positioning data, and sends the positioning calibration data to the vehicle-mounted device. Since when a vehicle lacks network signals, the vehicle cannot obtain high-precision vehicle positioning, when the vehicle-mounted device determines that current network conditions meet the preset data transmission conditions, the vehicle-mounted device sends the vehicle positioning data to the satellite device; when the satellite device receives the vehicle positioning data sent by the vehicle-mounted device, it can determine that the vehicle is located in a position with poor network signals; at this time, the satellite device can obtain calibrated positioning calibration data by accessing the core network and directly send the positioning calibration data to the vehicle-mounted device; after receiving the calibrated positioning calibration data, the vehicle-mounted device can calibrate the vehicle positioning data thereof, and finally the vehicle can obtain a high-precision vehicle positioning result. By means of the method, when the vehicle enters an area with poor network signals, the high-precision vehicle positioning result can still be obtained, thereby greatly ensuring driving safety of a driver.

It should be noted that in the present disclosure, the terms "include", "including", or any other variations thereof are intended to cover a non-exclusive inclusion, such that a process, a method, an article, or a system including a series of elements not only includes the elements, but further includes other elements not explicitly listed, or further includes inherent elements of the process, the method, the article, or the system. Without more limitations, an element defined by the statement "including a ..." does not exclude existence of another identical element in the process, the method, the article, or the system including the element.

The serial numbers of the embodiments of the present application are merely for description and do not represent superiority or inferiority of the embodiments.

Through the descriptions of the above implementation manners, those skilled in the art may clearly understand that the methods in the above embodiments may be implemented by means of software in combination with a necessary general hardware platform, and certainly may further be implemented through hardware, but in many cases, the former is a better implementation manner. Based on such understanding, the technical solutions of the present application essentially or the part contributing to the related art may be embodied in a form of a software product. The computer software product is stored in a storage medium as described above (such as ROM/RAM, a magnetic disk, or an optical disc), and includes a plurality of instructions configured to enable a terminal device (which may be a mobile phone, a computer, a server, or a network device) to execute the methods described in the embodiments of the present application.

The above descriptions are merely some embodiments of the present application and are not intended to limit the patent scope of the present application. Any equivalent structure or equivalent process transformation made by using the contents of the specification and the drawings of the present application, or directly or indirectly applied to other related technical fields, shall fall within the patent protection scope of the present application in the same way.

## Claims

1. A vehicle positioning method, applied to a satellite device, **characterized by** comprising:
receiving vehicle positioning data sent by vehicle-mounted device in response to determining that network conditions meet preset data transmission conditions; and
obtaining positioning calibration data through a core network according to the vehicle positioning data, and sending the positioning calibration data to the vehicle-mounted device.

2. The vehicle positioning method according to claim 1, wherein before the receiving vehicle positioning data sent by the vehicle-mounted device in response to determining that the network conditions meet the preset data transmission conditions, the method comprises:
receiving a satellite positioning data request instruction sent by the vehicle-mounted device; and
obtaining satellite positioning data according to the satellite positioning data request instruction, and sending the satellite positioning data to the vehicle-mounted device, such that the vehicle-mounted device determines the network conditions.

3. The vehicle positioning method according to claim 2, wherein before the obtaining positioning calibration data through the core network according to the vehicle positioning data and sending the positioning calibration data to the vehicle-mounted device, the method comprises:
sending the satellite positioning data to a reference station, such that the reference station sends the satellite positioning data to the core network; and verifying, by the core network, the satellite positioning data to obtain a verification result.

4. The vehicle positioning method according to claim 3, wherein the obtaining positioning calibration data through the core network according to the vehicle positioning data and sending the positioning calibration data to the vehicle-mounted device comprises:
sending the vehicle positioning data to the core network through a preset protocol gateway, such that the core network verifies the vehicle positioning data according to the verification result to obtain the positioning calibration data; and
receiving the positioning calibration data returned by the core network through the protocol gateway, and sending the positioning calibration data to the vehicle-mounted device.

5. A vehicle positioning method, applied to vehicle-mounted device, **characterized by** comprising:
obtaining vehicle positioning data;
sending the vehicle positioning data to satellite device and receiving positioning calibration data returned by the satellite device in response to determining that network conditions meet preset data transmission conditions; and
calibrating the vehicle positioning data according to the positioning calibration data to obtain a positioning result.

6. The vehicle positioning method according to claim 5, wherein the obtaining vehicle positioning data comprises:
obtaining a request instruction for satellite positioning data;
sending the request instruction for the satellite positioning data to the satellite device, and receiving the satellite positioning data returned by the satellite device; and
generating the vehicle positioning data according to the satellite positioning data.

7. The vehicle positioning method according to claim 6, wherein the generating the vehicle positioning data according to the satellite positioning data comprises:
parsing the received satellite positioning data;
generating the vehicle positioning data by merging the satellite positioning data and vehicle identification information; and
storing the vehicle positioning data in a local memory, or sending the vehicle positioning data to a satellite through satellite communication for further processing.

8. The vehicle positioning method according to claim 6, wherein before the sending the vehicle positioning data to the satellite device in response to determining that the network conditions meet the preset data transmission conditions, the method comprises:
sending the vehicle positioning data to the core network, and determining a sending result of the vehicle positioning data, wherein the sending result comprises sending success and sending failure; and
in response to the sending result being the sending failure, determining whether the network conditions meet the preset data transmission conditions.

9. A vehicle positioning apparatus, **characterized by** comprising:
a data receiving module configured to receive vehicle positioning data sent by vehicle-mounted device in response to determining that network conditions meet preset data transmission conditions; and
a data transmission module configured to obtain positioning calibration data through a core network according to the vehicle positioning data, and send the positioning calibration data to the vehicle-mounted device.

10. A terminal device, **characterized by** comprising:
a memory;
a processor; and
a vehicle positioning program stored in the memory and executable on the processor,
wherein when the vehicle positioning program is executed by the processor, the vehicle positioning method according to any one of claims 1 to 8 is implemented.

11. A computer-readable storage medium, storing a vehicle positioning program, wherein when the vehicle positioning program is executed by a processor, the vehicle positioning method according to any one of claims 1 to 8 is implemented.
